# FASCICULE DE BREVET EUROPEEN

(11) **EP 4 496 722 B1**
(45) Date de publication et mention de la délivrance du brevet: **02.09.2026**
(21) Numéro de dépôt: 23715569.2
(22) Date de dépôt: 02.03.2023
(51) Int. Cl.: B60J 10/00, B60J 10/84, B60R 13/04, E05D 11/00

(54) **COUVERCLE DE CHARNIERE POUR LA CHARNIERE DE HAYON DE VEHICULE, STRUCTURES DE CARROSSERIES ET VEHICULES**
SCHARNIERABDECKUNG FÜR EIN FAHRZEUGHECKKLAPPENSCHARNIER, KAROSSERIESTRUKTUREN UND FAHRZEUGE
HINGE COVER FOR A VEHICLE TAILGATE HINGE, BODYWORK STRUCTURES AND VEHICLES

(30) Priorité: 21.03.2022 CN 202210276372
(43) Date de publication de la demande: 29.01.2025
(73) Titulaire: Stellantis Auto SAS, 78300 Poissy (FR)
(72) Inventeur: ZHOU, Ying, Shanghai, 200233 (CN); ZHANG, Yucai, Shanghai, 200233 (CN); WU, Yitao, Shanghai, 200233 (CN); YAN, Jing, SHANGHAI, 200233 (CN); ZHANG, Yin, Shanghai, 200233 (CN)
(74) Mandataire: BCIP
(86) Numéro de dépôt international: PCT/FR2023/050278
(87) Numéro de publication internationale: WO 2023/180647

(56) Documents cités:
- CN-U- 211 851 381
- US-A1- 2014 117 723
- US-A1- 2019 032 383

## Description

### DOMAINE DE L'INVENTION

La présente invention concerne généralement le domaine technique des véhicules et concerne plus particulièrement les couvercles de charnière pour la charnière de hayon de véhicule, les structures de carrosserie et les véhicules.

### ARRIÈRE-PLAN DE L'INVENTION

Certains modèles de véhicules, par exemple les véhicules à hayon comme dans les documents US 2019/032383 A1 et US 2014/117723 A1, ont un hayon connecté au toit de carrosserie à l'arrière du véhicule. Le hayon peut être annexé de manière pivotante au toit de carrosserie par une charnière pour se déplacer entre une position ouverte et une position fermée. En général, un couvercle de charnière est prévu au niveau du lieu de montage de charnière, mais actuellement, le couvercle de charnière n'adhère pas bien aux composants adjacents (en particulier aux composants qui ne sont pas directement connectés au couvercle de charnière) lorsqu'elle est montée sur la carrosserie, ce qui entraîne, lorsque le hayon est ouvert, des espaces entre le couvercle de charnière et les composants adjacents du véhicule exposant des surfaces non apparentes. En outre, ces espaces peuvent entraîner l'écoulement d'eau dans le véhicule lorsque, par exemple, il pleut ou que l'on lave la voiture.

### OBJET ET RÉSUMÉ DE L'INVENTION

L'objet de la présente invention est de résoudre les problèmes susmentionnés de l'art antérieur, en proposant un couvercle de charnière amélioré pour les charnières de hayon de véhicule, des structures de carrosserie et des véhicules.

A cette fin, un premier aspect de l'invention propose un couvercle de charnière selon la revendication 1.

De cette façon, les composants non apparents ou les surfaces non apparentes à proximité des charnières du hayon ne sont pas visibles pour l'utilisateur lorsqu'il ouvre le hayon du véhicule, ce qui améliore la qualité perçue du véhicule au niveau des charnières du hayon. En même temps, la construction de la lèvre d'étanchéité superposée aux composants du véhicule aide également à empêcher l'eau de pénétrer dans le véhicule.

Selon la conception technique ci-dessus, le premier aspect de l'invention peut de plus comprendre une ou plusieurs des formes facultatives suivantes.

Dans certaines formes optionnelles, ladite lèvre d'étanchéité est prévue autour de la périphérie entière dudit corps de couvercle.

Dans certaines formes facultatives, ladite lèvre d'étanchéité est formée d'une seule pièce avec ledit corps de couvercle.

Un deuxième aspect de l'invention propose une structure de carrosserie, ladite structure de carrosserie comprenant : périphérie latérale de carrosserie, couvercle de charnière selon le premier aspect de la présente invention, un élément de décoration extérieure de la périphérie latérale de carrosserie, ledit élément de décoration extérieure de la périphérie latérale de carrosserie étant monté sur la périphérie latérale de carrosserie et se trouvant adjacent audit couvercle de charnière ; dans lequel, la lèvre d'étanchéité dudit couvercle de charnière est configurée de manière à être superposée au moins partiellement à l'élément de décoration extérieure de la périphérie latérale de carrosserie.

Le deuxième aspect de l'invention selon la conception technique ci-dessus peut, en outre, comprendre une ou plusieurs des formes facultatives suivantes.

Dans certaines formes optionnelles, ladite structure de carrosserie comprend en outre des canaux de drainage arrière de la périphérie latérale, lesdits canaux de drainage arrière de la périphérie latérale étant reliés au coin de la périphérie latérale de carrosserie destinée à recevoir le hayon du véhicule, ledit couvercle de charnière est monté sur lesdits canaux de drainage arrière de la périphérie latérale, la lèvre d'étanchéité dudit couvercle de charnière étant au moins partiellement superposée sur le côté extérieur desdits canaux de drainage arrière de la périphérie latérale pour diriger l'eau vers les canaux de drainage arrière de la périphérie latérale.

Dans certaines formes facultatives, ledit couvercle de charnière recouvre au moins partiellement les bords de canaux de drainage arrière de la périphérie latérale adjacents à ladite périphérie latérale de carrosserie.

Dans certaines formes alternatives, ledit élément de décoration extérieure de la périphérie latérale comprend une partie de plaque, ladite partie de plaque étant au moins partiellement superposée sur le côté extérieur de ladite lèvre d'étanchéité de sorte qu'il n'y ait pas de jeu entre le couvercle de charnière et ladite partie de plaque exposant une surface non apparente du véhicule, lorsque le hayon du véhicule est ouvert.

Dans certaines formes optionnelles, le bord de ladite partie de plaque est pourvu d'une surface de guidage pour diriger le flux d'eau du bord de ladite partie de plaque vers ladite lèvre d'étanchéité.

Dans certaines formes alternatives, ladite lèvre d'étanchéité est munie de nervures de positionnement, les nervures de positionnement s'étendant vers la périphérie latérale de carrosserie pour être appliquées contre la périphérie latérale de carrosserie, de façon à positionner ladite lèvre d'étanchéité par rapport à la périphérie latérale de carrosserie, et les nervures de positionnement sont disposées proches de l'intersection de ladite lèvre d'étanchéité et de ladite partie de plaque.

Dans certaines formes facultatives, ledit élément de décoration extérieure de la périphérie latérale de carrosserie est pourvu d'un élément de barrière d'eau sur son côté intérieur, ledit élément de barrière d'eau étant prévu proche de l'intersection de ladite lèvre d'étanchéité et de ladite partie de plaque.

Un troisième aspect de la présente invention propose un véhicule, ledit véhicule comprenant une structure de carrosserie telle que décrite selon le deuxième aspect de la présente invention.

Le couvercle de charnière, la structure de carrosserie et le véhicule pour les charnières de hayon de véhicule selon l'invention offrent une bonne qualité perçue ainsi qu'une bonne performance de drainage.

### BRÈVE DESCRIPTION DES DESSINS

D'autres caractéristiques ainsi que les avantages de la présente invention seront mieux compris par les modes de réalisation optionnels suivants décrits en détail et en relation avec les figures annexées, dans lesquels des marques identiques identifient des composants identiques ou similaires, dans lesquels :
La figure 1 est une vue tridimensionnelle partielle d'une structure de carrosserie, selon un exemple de réalisation de la présente invention.
La figure 2 est une vue partielle agrandie de la structure du carrosserie au niveau du couvercle de la charnière, selon un exemple de réalisation de la présente invention.
La figure 3 est une vue tridimensionnelle d'une couvercle de charnière, selon un exemple de réalisation de la présente invention.
La figure 4 est une autre vue partielle agrandie de la structure de carrosserie au niveau du couvercle de la charnière, selon un exemple de réalisation de la présente invention.
La figure 5A est une vue en coupe partielle tranchée le long de la ligne A-A de la figure 4.
La figure 5B est une vue en coupe partielle tranchée le long de la ligne B-B de la figure 4.
Les figures 6 à 8 montrent respectivement les différentes étapes d'assemblage des composants du véhicule au niveau ou près du couvercle de charnière de la structure de carrosserie, selon un exemple de réalisation de la présente invention.
La figure 9 illustre une vue en coupe partielle tranchée le long de la ligne C-C de la figure 8.
La figure 10 illustre une vue partiellement agrandie de l'endroit adjacent du couvercle de charnière audit élément de décoration extérieure de la périphérie latérale, selon un exemple de réalisation de la présente invention; et
La figure 11 illustre une vue en coupe partielle tranchée le long de la ligne médiane D-D de la figure 10.

### DESCRIPTION DÉTAILLÉE D'UN MODE DE RÉALISATION

La mise en œuvre et l'utilisation des modes de réalisation sont discutées en détail ci-dessous. Il faut toutefois comprendre que les modes de réalisation spécifiques discutés ne sont que des exemples de manières particulières de mettre en œuvre et d'utiliser l'invention et ne sont pas destinés à limiter la portée de l'invention. La représentation de la position structurelle des différents composants dans la description, telle que les directions haut, bas et autres, ne sont pas absolues, mais relatives. Ces orientations sont appropriées lorsque les pièces individuelles sont disposées comme indiqué dans les dessins, mais lorsque la position des pièces individuelles dans les dessins est modifiée, ces orientations sont également modifiées en conséquence.

Dans cette demande, sauf indication contraire, le côté intérieur ou la surface intérieure d'un composant fait référence au côté ou à la surface du composant faisant face à l'intérieur du véhicule, tandis que la surface extérieure ou externe d'un composant fait référence au côté ou à la surface du composant faisant face à l'extérieur du véhicule.

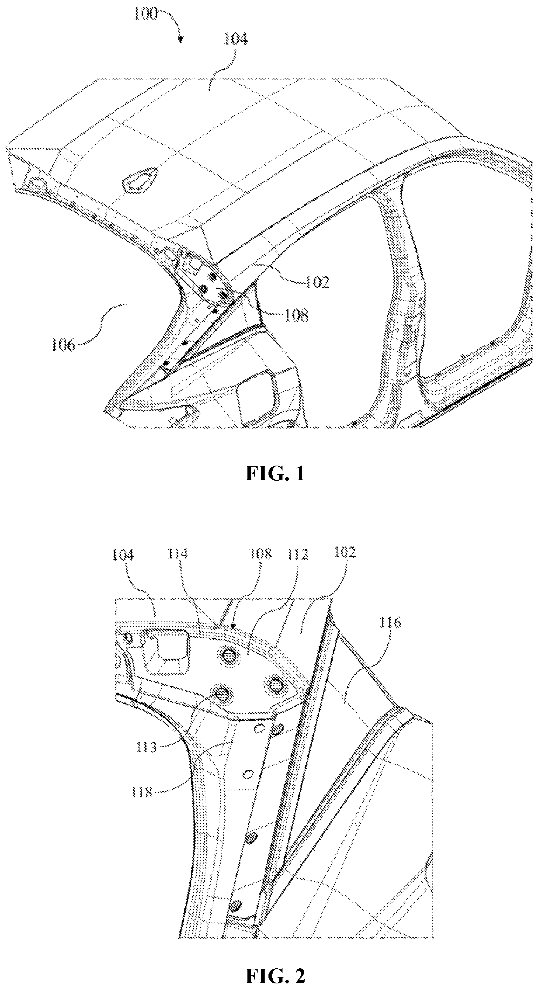

La figure 1 illustre une structure de carrosserie 100 selon un exemple de réalisation de la présente invention. Selon la figure 1, la structure de carrosserie 100 peut comprendre une périphérie latérale de carrosserie 102, un toit de carrosserie 104 et une périphérie arrière de carrosserie (non représentée). la périphérie latérale de carrosserie 102, le toit de carrosserie 104 et la périphérie arrière de carrosserie peuvent définir ensemble une baie de hayon 106 destinée à recevoir un hayon de véhicule (non représenté), dans lequel le hayon de véhicule peut être articulé avec le toit de carrosserie 104 par une charnière de hayon (non représentée), pour pivoter entre une position ouverte et une position fermée.

La structure de carrosserie 100 peut également comprendre une couvercle de charnière 108 pour la charnière de hayon, afin de cacher les composants/surfaces non apparents du véhicule, en particulier les composants/surfaces non apparents au niveau et à proximité de la charnière de hayon. Les composants/surfaces non apparents peuvent, par exemple, être des éléments structurels internes, et leurs surfaces des joints entre les composants du véhicule ou des surfaces présentant des caractéristiques structurelles complexes/convexes des composants du véhicule, etc.

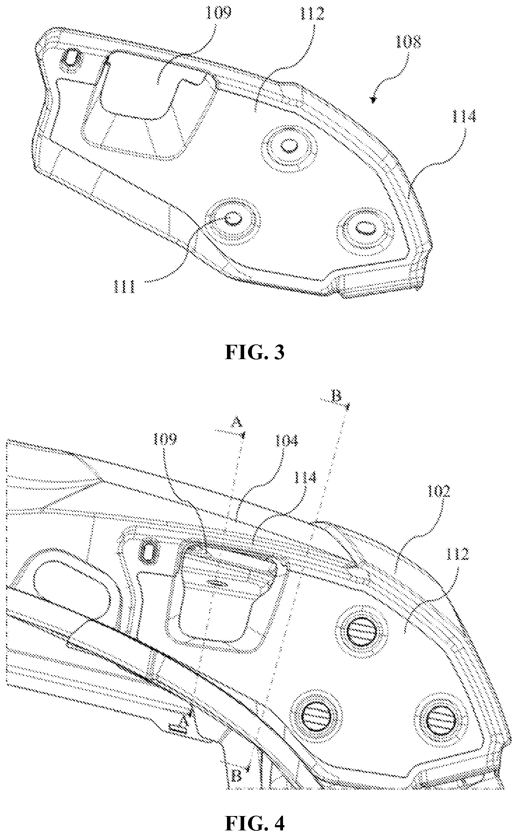

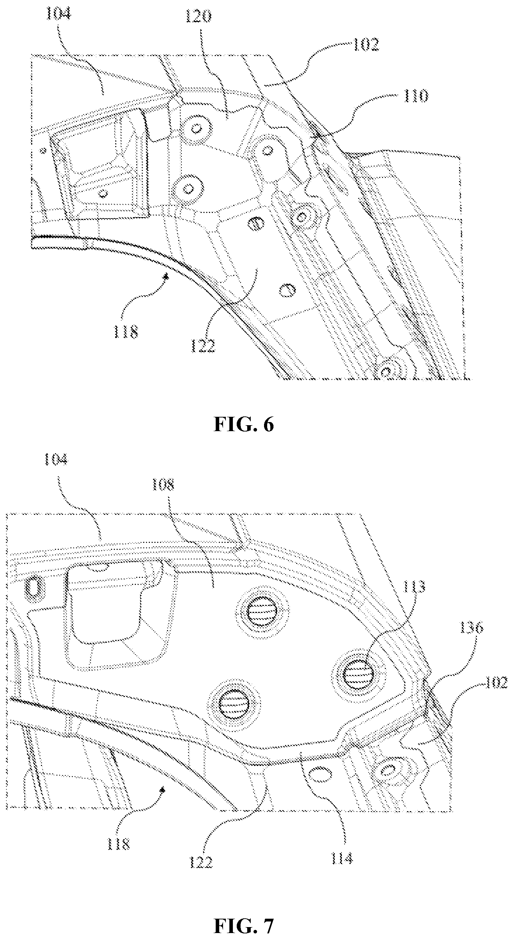

Selon figures 2 et 3, le couvercle de charnière 108 peut comprendre un corps de couvercle 112 et une lèvre d'étanchéité 114, prévue au moins partiellement autour de la périphérie du corps de couvercle 112. Dans le mode de réalisation illustré, le couvercle de charnière 108 peut être monté au niveau du coin 110 (voir figure 6) de périphérie latérale de carrosserie 102, pour recevoir le hayon du véhicule. En option, la lèvre d'étanchéité 114 du couvercle de charnière 108 peut être formée d'une seule pièce avec le corps de couvercle 112. En option, la lèvre d'étanchéité 114 peut être constituée d'un élastomère. Par exemple, la lèvre d'étanchéité 114 peut être constituée de caoutchouc vulcanisé thermoplastique (TPV). La lèvre d'étanchéité 114 peut être prévue pour être superposée au moins partiellement aux composants du véhicule adjacents à le couvercle de charnière 108 de sorte qu'il n'y ait pas de jeu entre le couvercle de charnière 108 et les composants du véhicule exposant les surfaces non apparentes du véhicule, lorsque le hayon du véhicule est ouvert, améliorant ainsi la qualité perçue au niveau de la charnière du hayon du véhicule. En même temps, la configuration de la lèvre d'étanchéité 114 superposée aux composants adjacents du véhicule empêche également l'eau de s'écouler dans le véhicule en cas de pluie ou de lavage de voiture. En option, la lèvre d'étanchéité 114 peut être prévue pour être superposée de manière étanche au moins partiellement aux composants du véhicule adjacents au couvercle de charnière 108, pour empêcher l'eau de s'écouler dans le véhicule.

Dans le mode de réalisation illustré, le couvercle de charnière 108 peut être muni d'un trou de charnière 109 pour le passage de la charnière de hayon, afin d'éviter toute interférence mécanique avec le couvercle de charnière 108, lorsque la charnière de hayon est en mouvement. Le couvercle de la charnière 108 peut également être pourvu de trous de fixation 111, pour que des éléments de fixation 113 puissent passer à travers les trous de fixation 111, et ainsi fixer le couvercle de la charnière 108.

Selon la figure 2, dans le mode de réalisation illustré, la structure de carrosserie 100 peut comprendre un élément de décoration extérieure de la périphérie latérale 116 et des canaux de drainage arrière de la périphérie latérale 118. Le couvercle de charnière 108 est adjacent dans son alentour au toit 104, à la périphérie latérale de carrosserie 102, à l'élément de décoration extérieure de la périphérie latérale 116 et aux canaux de drainage arrière de la périphérie latérale 118. En option, comme illustré sur la figure 2, la lèvre d'étanchéité 114 du couvercle de charnière 108 peut être prévue le long de la périphérie entière du corps de couvercle 112 (c'est-à-dire que la lèvre d'étanchéité 114 entoure complètement le corps de couvercle 112) , pour être superposée au moins partiellement au toit 104, à la périphérie latérale de carrosserie 102, à l'élément de décoration extérieure de la périphérie latérale 116, et aux canaux de drainage arrière de la périphérie latérale 118, de sorte qu'il existe pas de jeu entre le couvercle de charnière 108 et ces composants de carrosserie exposant des surfaces non apparentes, lorsque le hayon est ouvert, et le chevauchement de la lèvre d'étanchéité 114 avec ces composants de carrosserie empêche également l'eau de s'écouler dans le véhicule.

En référence aux figures 4 à 5B, dans le mode de réalisation illustré, la partie supérieure de la lèvre d'étanchéité 114 du couvercle de charnière 108 peut être au moins partiellement superposée à la périphérie latérale de carrosserie 102 et au toit de carrosserie 104 de manière étanche. Dans le mode de réalisation illustré, la partie supérieure de la lèvre d'étanchéité 114 du couvercle de charnière 108 peut être superposée au toit de carrosserie 104 à un endroit relativement proche du trou de charnière 109, et cette partie supérieure peut être superposée à la périphérie latérale de carrosserie 102 à un endroit relativement éloigné du trou de charnière 109.

Selon la figure 6, dans le mode de réalisation illustré, les canaux de drainage arrière de la périphérie latérale 118 peuvent être reliés au coin 110 de la périphérie latérale de carrosserie 102 pour évacuer l'eau à proximité de la charnière du hayon. Les canaux de drainage arrière de la périphérie latérale 118 peuvent comprendre une première section 120 et une seconde section 122 reliées l'une à l'autre selon un angle. La première section 120 et la seconde section 122 sont prévues sur chaque côté du coin 110 de la périphérie latérale de carrosserie 102. La première section 120 est plus proche du toit de carrosserie 104 que la seconde section 122.

En se référant à la figure 7, dans le mode de réalisation illustré, le couvercle de charnière 108 peut être monté sur le côté extérieur de la première section 120 des canaux de drainage arrière de la périphérie latérale 118 par les éléments de fixation 113. La lèvre d'étanchéité 114 du couvercle de charnière 108 est au moins partiellement superposée sur l'extérieur des canaux de drainage arrière de la périphérie latérale 118 pour diriger l'eau vers les canaux de drainage arrière de la périphérie latérale 118. En référence aux figures 4 à 5B, dans le mode de réalisation illustré, la partie inférieure de la lèvre d'étanchéité 114 peut être superposée de manière étanche sur l'extérieur de la seconde section 122 des canaux de drainage arrière de la périphérie latérale 118, pour diriger l'écoulement d'eau vers les canaux de drainage arrière de la périphérie latérale 118.

En référence combinée aux figures 6 et 7, les bords des canaux de drainage arrière de la périphérie latérale 118 adjacents à d'autres composants du véhicule, et en particulier les bords des canaux de drainage arrière de la périphérie latérale 118 adjacents au périphérie latérale de carrosserie 102, peuvent être revêtus d'un produit d'étanchéité pour empêcher l'eau de pénétrer dans le véhicule. Le couvercle de charnière 108 peut recouvrir au moins partiellement les bords des canaux de drainage arrière de la périphérie latérale 118 adjacents au périphérie latérale de carrosserie 102. Dans le mode de réalisation illustré, le couvercle de charnière 108 recouvre les bords de la première section 120 du canaux de drainage arrière de la périphérie 118 adjacents au périphérie de carrosserie 102, pour couvrir, par exemple, le produit d'étanchéité au niveau de ces bords, améliorant ainsi l'apparence et/ou la qualité perçue du véhicule.

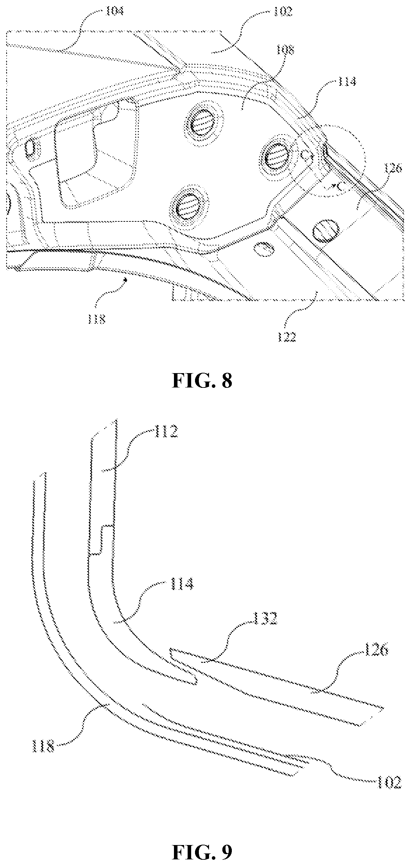

En se référant aux figures 8 à 11, l'élément de décoration extérieure de la périphérie 116 peut comprendre des parties de plaque 124, 126 superposées au moins partiellement sur le côté extérieur de la lèvre d'étanchéité 114 de sorte qu'il n'y a pas de jeu entre le couvercle de charnière 108 et les parties de plaque exposant une surface non apparente du véhicule lorsque le hayon du véhicule est ouvert.

En se référant aux figures 2, 6 et 10, dans le mode de réalisation illustré, l'élément de décoration extérieure de la périphérie 116 peut comprendre une première partie de plaque 124 et une seconde partie de plaque 126 reliées l'une à l'autre selon un angle. La première partie de plaque 124 de l'élément de décoration extérieure de la périphérie 116 peut être prévue sur le côté extérieur de la périphérie de carrosserie 102, et la seconde partie de plaque 126 de l'élément de décoration extérieure de la périphérie 116 peut être prévue sur le côté extérieur de la seconde section 122 des canaux de drainage arrière de la périphérie 118.

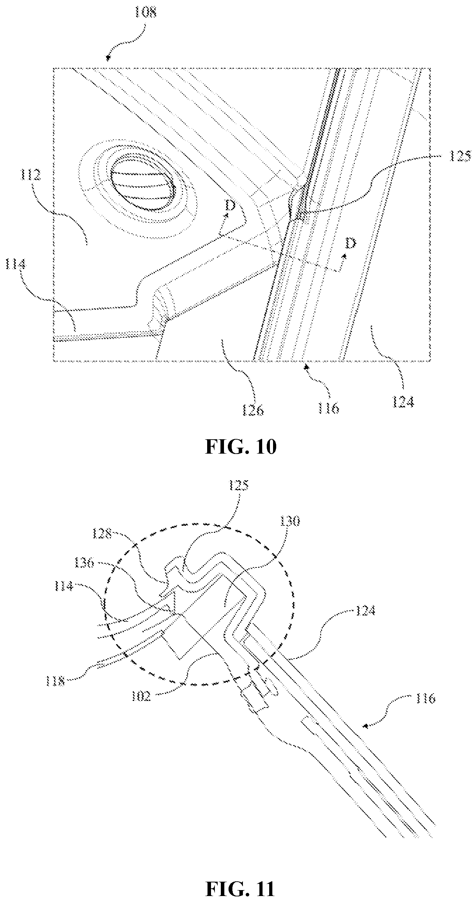

En se référant aux figures 10 et 11, dans le mode de réalisation illustré, la première partie de plaque 124 (spécifiquement, le bord 125 de la première partie de plaque 124) de l'élément de décoration extérieure de la périphérie 116 peut être au moins partiellement superposée sur le côté extérieur de la lèvre d'étanchéité 114, de sorte qu'il n'y a pas de jeu entre le couvercle de charnière 108 et la première partie de plaque 124 exposant une surface non apparente du véhicule lorsque le hayon du véhicule est ouvert. Dans le mode de réalisation illustré, la première partie de plaque 124 peut avoir une structure stratifiée, afin de fournir une décoration, une meilleure résistance mécanique et d'autres caractéristiques respectivement.

En option, le bord 125 de la première partie de plaque 124 peut être pourvu d'une surface de guidage 128 pour diriger l'eau du bord 125 de la première plaque 124 vers la lèvre d'étanchéité 114, de sorte que dans des scénarios tels que la pluie, le lavage de voiture, etc., l'eau s'écoulant vers le bord 125 de la première partie de plaque 124 peut être dirigée vers la lèvre d'étanchéité 114 du couvercle de charnière 108 et ensuite dirigée par la lèvre d'étanchéité 114 vers les canaux de drainage arrière de la périphérie latérale 118. Dans le mode de réalisation illustré, la surface de guidage 128 peut se présenter sous la forme d'une surface incurvée.

En option, la première partie de plaque 124 de l'élément de décoration extérieure de la périphérie 116 est pourvu d'un élément de barrière d'eau 130 sur son côté intérieur, l'élément de barrière d'eau 130 étant prévue adjacente à l'intersection de la lèvre d'étanchéité 114 et du première partie de plaque 124. De cette façon, même si une petite quantité d'eau pénètre dans le côté intérieur du première partie de plaque 124 via l'intersection de la lèvre d'étanchéité 114 et du première partie de plaque 124, elle peut être absorbée/bloquée par l'élément de barrière d'eau 130 afin d'éviter des effets indésirables tels que la corrosion de la périphérie de carrosserie 102. L'élément de barrière d'eau 130 peut, par exemple, être constitué d'éponge mousse. En option, l'élément de barrière d'eau peut être constitué, par exemple, de mousse éthylène propylène diène mischpolymère (EPDM) semi-perforée.

En se référant aux figures 8 et 9, dans le mode de réalisation illustré, la deuxième partie de plaque 126 (spécifiquement, le bord de la deuxième partie de plaque 126) de l'élément de décoration extérieure de la périphérie latérale 116 est superposée au moins partiellement sur le côté extérieur de la lèvre d'étanchéité 114, de sorte qu'il n'y ait pas de jeu entre le couvercle de charnière 108 et la deuxième partie de plaque 126 exposant une surface non apparente du véhicule lorsque le hayon du véhicule est ouvert. En option, les bords de la deuxième partie de plaque 126 peuvent avoir des chanfreins 132 pour mieux adhérer à la lèvre d'étanchéité 114, permettant ainsi à l'eau de s'écouler facilement de la lèvre d'étanchéité 114 vers le dessus de la deuxième partie de plaque 126, et plus loin, dans les canaux de drainage arrière de la périphérie latérale 118.

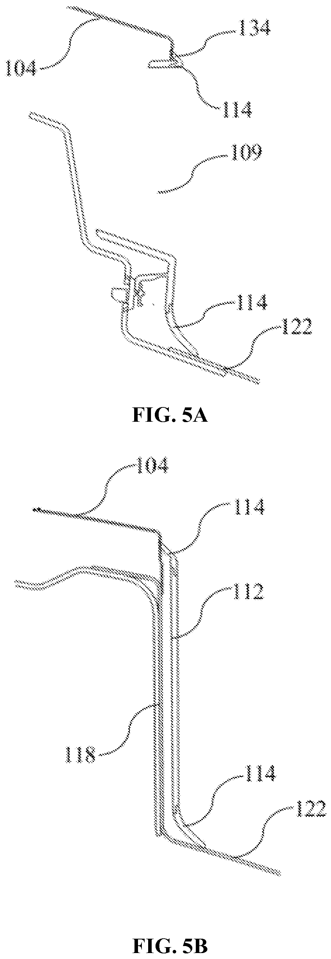

En se référant aux figures 4 et 5A et aux figures 10 et 11, la lèvre d'étanchéité 114 est munie de nervures de positionnement 134, 136 adaptées pour être appliquées contre les composants du véhicule adjacents à la lèvre d'étanchéité 114, afin de positionner la lèvre d'étanchéité 114 par rapport aux composants du véhicule.

Dans le mode de réalisation illustré sur les figures 4 et 5A, la partie supérieure de la lèvre d'étanchéité 114 peut être pourvue d'une première nervure de positionnement 134, la première nervure de positionnement 134 peut s'étendre vers le toit du carrosserie 104 pour être appliquée contre le toit du carrosserie 104, positionnant ainsi la lèvre d'étanchéité 114 par rapport au toit du carrosserie 104.

Dans le mode de réalisation illustré aux figures 10 et 11, la partie inférieure de la lèvre d'étanchéité 114 peut être pourvue d'une deuxième nervure de positionnement 136, qui peut s'étendre vers la périphérie latérale de carrosserie 102 pour être appliquée contre la périphérie latérale de carrosserie 102, positionnant ainsi la lèvre d'étanchéité 114 par rapport au périphérie latérale de carrosserie 102. Dans le mode de réalisation illustré, la deuxième nervure de positionnement 136 peut être prévue à proximité de l'intersection de la lèvre d'étanchéité 114 avec le bord 125 de la première partie de plaque 124. De cette façon, dans un scénario tel qu'un lavage de voiture par exemple, lorsque l'eau se précipite vers l'intersection de la lèvre d'étanchéité 114 et de la première partie de plaque 124, la seconde nervure de positionnement 136 peut empêcher la lèvre d'étanchéité 114 de se déplacer vers la périphérie latérale de carrosserie 102, s'il existe pas de seconde nervure de positionnement 136, l'intersection de la lèvre d'étanchéité 114 et de la première partie de plaque 124 peut créer un espace assez grand, ce qui entraîne une grande quantité d'eau s'écoulant dans le côté intérieur de la première partie de plaque 124.

Il est entendu que les divers composants et caractéristiques décrits dans le présent document peuvent être fabriqués à partir d'une variété de matériaux, y compris, mais sans s'y limiter, des polymères, du caoutchouc, des métaux et d'autres matériaux ou combinaisons de matériaux appropriés connus de l'homme de l'art. Les modes de réalisation représentés sur les figures 1 à 11 montrent uniquement la forme, les dimensions et l'agencement de divers composants optionnels d'une couvercle de charnière de hayon de véhicule, d'une structure de carrosserie et d'un véhicule selon la présente invention ; cependant ils sont simplement illustratifs et non limitatifs, et d'autres formes, dimensions et agencements peuvent être adoptés sans s'écarter de l'idée et de la portée de la présente invention.

Ce qui précède a révélé le contenu technique et les caractéristiques techniques de la présente invention ; cependant, il est entendu que, dans le cadre de l'idée créative de la présente invention, diverses variations et améliorations peuvent être apportées aux idées divulguées ci-dessus par un homme de l'art, mais toutes entrent dans le cadre de la protection de la présente invention. La description des modes de réalisation susmentionnés est exemplaire et non limitative, et l'étendue de la protection de la présente invention est déterminée par les revendications.

## Revendications

1. Couvercle de charnière (108) pour une charnière de hayon de véhicule, ledit couvercle de charnière comprenant un corps de couvercle (112) et une lèvre d'étanchéité (114) prévue au moins partiellement autour de la périphérie dudit corps de couvercle, ladite lèvre d'étanchéité étant configurée pour être superposée au moins partiellement aux composants adjacents audit couvercle de charnière, de sorte qu'il n'y ait pas de jeu entre ledit couvercle de charnière et les composants exposant les surfaces non apparentes de véhicule, lorsque le hayon de véhicule est ouvert, **caractérisé en ce que** ladite lèvre d'étanchéité (114) est munie de nervures de positionnement (134, 136), lesdites nervures de positionnement étant adaptées pour être appliquées contre les composants de véhicule adjacents à ladite lèvre d'étanchéité, afin de positionner ladite lèvre d'étanchéité par rapport aux composants de véhicule.

2. Couvercle de charnière selon la revendication 1, **caractérisé en ce que** ladite lèvre d'étanchéité est prévue autour toute la périphérie dudit corps de couvercle.

3. Couvercle de charnière selon la revendication 1 ou 2, **caractérisé en ce que** ladite lèvre d'étanchéité est formée d'une seule pièce avec ledit corps de couvercle.

4. Structure de carrosserie, **caractérisée en ce que** ladite structure de carrosserie comprend :
- une périphérie latérale de carrosserie,
- un couvercle de charnière selon l'une quelconque des revendications 1 à 3,
- un élément de décoration extérieure de la périphérie latérale de carrosserie, ledit élément de décoration extérieure de la périphérie latérale de carrosserie étant monté sur la périphérie latérale de carrosserie et se trouvant adjacent audit couvercle de charnière,
dans lequel, la lèvre d'étanchéité du couvercle de charnière est configurée de manière à être superposée au moins partiellement à l'élément de décoration extérieure de la périphérie latérale de carrosserie.

5. Structure de carrosserie selon la revendication 4, **caractérisée en ce que** ladite structure de carrosserie comprend en outre des canaux de drainage arrière de la périphérie latérale, lesdits canaux de drainage arrière de la périphérie latérale étant reliés au coin de la périphérie latérale de carrosserie destinée pour recevoir le hayon du véhicule,
ledit couvercle de charnière est monté sur lesdits canaux de drainage arrière de la périphérie latérale, la lèvre d'étanchéité du couvercle de charnière étant au moins partiellement superposée à l'extérieur dudit canaux de drainage arrière de la périphérie latérale pour diriger l'eau vers les canaux de drainage arrière de la périphérie latérale.

6. Structure de carrosserie selon la revendication 5, **caractérisée en ce que** le couvercle de charnière recouvre au moins partiellement les bords des canaux de drainage arrière de la périphérie latérale adjacents à ladite périphérie latérale de carrosserie.

7. Structure de carrosserie selon l'une quelconque des revendications 4 à 6, **caractérisée en ce que** ledit élément de décoration extérieure de la périphérie latérale comprend une partie de plaque, ladite partie de plaque étant au moins partiellement superposée sur le côté extérieur de ladite lèvre d'étanchéité, de sorte qu'il n'y ait pas de jeu entre le couvercle de charnière et ladite partie de plaque exposant les surfaces non apparente du véhicule, lorsque le hayon du véhicule est ouvert.

8. Structure de carrosserie selon la revendication 7, **caractérisée en ce que** le bord de ladite partie de plaque est pourvu d'une surface de guidage pour diriger le flux d'eau depuis le bord de ladite partie de plaque vers ladite lèvre d'étanchéité.

9. Structure de carrosserie selon la revendication 7, **caractérisée en ce que** ladite lèvre d'étanchéité est munie des nervures de positionnement, les nervures de positionnement s'étendant vers la périphérie latérale de carrosserie pour être appliquées contre la périphérie latérale de carrosserie, de façon à positionner ladite lèvre d'étanchéité par rapport à la périphérie latérale de carrosserie, et les nervures de positionnement étant disposées proches de l'intersection de ladite lèvre d'étanchéité et de ladite partie de plaque.

10. Structure de carrosserie selon la revendication 7, **caractérisée en ce que** ledit élément de décoration extérieure de la périphérie latérale de carrosserie est pourvu d'un élément de barrière d'eau dans son côté intérieur, ledit élément de barrière d'eau étant prévu proche de l'intersection de ladite lèvre d'étanchéité et de ladite partie de plaque.

11. Véhicule, **caractérisé en ce que** ledit véhicule comprend une structure de carrosserie selon l'une quelconque des revendications 4 à 10.

## Patentansprüche

1. Scharnierabdeckung (108) für ein Fahrzeugheckklappenscharnier, wobei die Scharnierabdeckung einen Abdeckkörper (112) und eine Dichtlippe (114) aufweist, die zumindest teilweise um den Umfang des Abdeckkörpers herum vorgesehen ist, wobei die Dichtlippe so konfiguriert ist, dass sie zumindest teilweise über den an die Scharnierabdeckung angrenzenden Bauteilen liegt, sodass kein Spiel zwischen der Scharnierabdeckung und den Bauteilen besteht, die die nicht sichtbaren Fahrzeugflächen freilegen, wenn die Fahrzeugheckklappe geöffnet ist, **dadurch gekennzeichnet, dass** die Dichtlippe (114) mit Positionierungsrippen (134, 136) versehen ist, wobei die Positionierungsrippen geeignet sind, an den an die Dichtlippe angrenzenden Fahrzeugkomponenten angelegt zu werden, um die Dichtlippe relativ zu den Fahrzeugkomponenten zu positionieren.

2. Scharnierabdeckung nach Anspruch 1, **dadurch gekennzeichnet, dass** die Dichtlippe um den gesamten Umfang des Abdeckkörpers herum vorgesehen ist.

3. Scharnierdeckel nach Anspruch 1 oder 2, **dadurch gekennzeichnet, dass** die Dichtlippe einstückig mit dem Deckelkörper ausgebildet ist.

4. Karosseriestruktur, **dadurch gekennzeichnet, dass** die Karosseriestruktur umfasst:
- seitlicher Umfang des Aufbaus,
- eine Scharnierabdeckung nach einem der Ansprüche 1 bis 3,
- ein äußeres Dekorationselement des seitlichen Umfangs der Karosserie, wobei das äußere Dekorationselement des seitlichen Umfangs der Karosserie am seitlichen Umfang der Karosserie angebracht ist und an die Scharnierabdeckung angrenzt,
Dabei ist die Dichtlippe des Scharnierdeckels so ausgebildet, dass sie zumindest teilweise über dem äußeren Dekorationselement des seitlichen Umfangs der Karosserie liegt.

5. Karosseriestruktur nach Anspruch 4, **dadurch gekennzeichnet, dass** die Karosseriestruktur ferner hintere Abflusskanäle des seitlichen Umfangs aufweist, wobei die hinteren Abflusskanäle des seitlichen Umfangs mit der Ecke des seitlichen Umfangs der Karosserie zur Aufnahme der Fahrzeugklappe verbunden sind, wobei die Scharnierabdeckung an den hinteren Abflusskanälen des seitlichen Umfangs angebracht ist, wobei die Dichtlippe der Scharnierabdeckung wenigstens teilweise außerhalb des hinteren Abflusskanals des seitlichen Umfangs überlagert ist, um Wasser zu den hinteren Abflusskanälen des seitlichen Umfangs zu leiten.

6. Karosseriestruktur nach Anspruch 5, **dadurch gekennzeichnet, dass** die Scharnierabdeckung zumindest teilweise die Kanten der hinteren Dränagekanäle des seitlichen Umfangs abdeckt, die an den seitlichen Umfang der Karosserie angrenzen.

7. Karosseriestruktur nach einem der Ansprüche 4 bis 6, **dadurch gekennzeichnet, dass** das äußere Dekorationselement des seitlichen Umfangs einen Plattenabschnitt aufweist, wobei der Plattenabschnitt wenigstens teilweise auf der Außenseite der Dichtlippe überlagert ist, sodass kein Spiel zwischen der Scharnierabdeckung und dem Plattenabschnitt besteht, der die nicht sichtbaren Oberflächen des Fahrzeugs freilegt, wenn die Fahrzeugklappe geöffnet ist.

8. Karosseriestruktur nach Anspruch 7, **dadurch gekennzeichnet, dass** die Kante des Plattenabschnitts mit einer Führungsfläche versehen ist, um den Wasserstrom von der Kante des Plattenabschnitts zur Dichtlippe zu leiten.

9. Karosseriestruktur nach Anspruch 7, **dadurch gekennzeichnet, dass** die Dichtlippe mit Positionierungsrippen versehen ist, wobei sich die Positionierungsrippen zum seitlichen Umfang der Karosserie hin erstrecken, um an dem seitlichen Umfang der Karosserie anzuliegen, um die Dichtlippe in Bezug auf den seitlichen Umfang der Karosserie zu positionieren, und wobei die Positionierungsrippen nahe dem Schnittpunkt der Dichtlippe und des Plattenabschnitts angeordnet sind.

10. Karosseriestruktur nach Anspruch 7, **dadurch gekennzeichnet, dass** das äußere Dekorationselement des seitlichen Umfangs der Karosserie an seiner Innenseite mit einem Wasserbarrierenelement versehen ist, wobei das Wasserbarrierenelement in der Nähe des Schnittpunkts der Dichtlippe und des Plattenabschnitts vorgesehen ist.

11. Fahrzeug, **dadurch gekennzeichnet, dass** das Fahrzeug eine Karosseriestruktur nach einem der Ansprüche 4 bis 10 aufweist.

## Claims

1. Hinge cover (108) for a vehicle tailgate hinge, said hinge cover comprising a cover body (112) and a sealing lip (114) provided at least partially around the periphery of said cover body, said sealing lip being configured to be at least partially superposed on the components adjacent to said hinge cover, such that there is no play between said hinge cover and the components exposing the non-apparent vehicle surfaces, when the vehicle tailgate is open, wherein said sealing lip (114) is provided with positioning ribs (134, 136), said positioning ribs being adapted to be pressed against the vehicle components adjacent to said sealing lip, in order to position said sealing lip by sealing report to vehicle components.

2. Hinge cover according to claim 1, wherein said sealing lip is provided around the entire periphery of said cover body.

3. Hinge cover according to claim 1 or 2, wherein said sealing lip is made in a single component with said cover body.

4. Body structure, **characterised in that** the said body structure comprises:
- a lateral periphery of the bodywork,
a hinge cover according to any one of claims 1 to 3,
an external decorative element of the lateral periphery of the bodywork, said external decorative element of the lateral periphery of the bodywork being mounted on the lateral periphery of the bodywork and being adjacent to said hinge cover,
in which, the sealing lip of the hinge cover is configured so as to be superposed at least partially on the external decorative element of the lateral periphery of the bodywork.

5. The bodywork structure according to claim 4, wherein said bodywork structure further comprises drainage channels on the rear of the lateral periphery, said drainage channels on the rear of the lateral periphery being connected to the corner of the lateral periphery of the bodywork intended to receive the tailgate of the vehicle, said hinge cover is mounted on said drainage channels on the rear of the lateral periphery, the sealing lip of the hinge cover being at least partially superposed on the outside of said drainage channels on the rear of the lateral periphery in order to direct the water towards the drainage channels on the rear of the lateral periphery.

6. The bodywork structure according to claim 5, wherein the hinge cover at least partially covers the edges of the drainage channels on the rear of the lateral periphery adjacent to said lateral periphery of the bodywork.

7. Bodywork structure according to any one of claims 4 to 6, wherein said outer decorative element of the lateral periphery comprises a plate part, said plate part being at least partially superposed on the outer side of said sealing lip, so that there is no play between the hinge cover and said plate part exposing the non-visible surfaces of the vehicle, when the tailgate of the vehicle is open.

8. The bodywork structure according to claim 7, wherein the edge of said plate portion is provided with a guide surface for directing the water flow from the edge of said plate portion towards said sealing lip.

9. Body structure according to claim 7, wherein said sealing lip is provided with positioning ribs, the positioning ribs extending towards the lateral periphery of the body to be pressed against the lateral periphery of the body, so as to position said sealing lip by report at the lateral periphery of the body, and the positioning ribs being arranged close to the intersection of said sealing lip and said plate part.

10. The bodywork structure according to claim 7, wherein said exterior decorative element of the lateral periphery of the bodywork is provided with a water barrier item in its internal side, said water barrier item being provided close to the intersection of said sealing lip and said plate portion.

11. Vehicle, **characterised in that** said vehicle comprises a bodywork structure according to any one of claims 4 to 10.
